# EUROPEAN PATENT APPLICATION

(11) **EP 3 933 058 A1**
(43) Date of publication of application: **05.01.2022**
(21) Application number: 20762479.2
(22) Date of filing: 15.01.2020
(51) Int. Cl.: C22B 7/00, C22B 34/36, C22B 3/12

(54) **TUNGSTEN RECOVERY METHOD**

(30) Priority: 25.02.2019 JP 2019032167
(71) Applicant: Mitsubishi Materials Corporation, Tokyo 100-8117 (JP); Japan New Metals Co., Ltd., Toyonaka-City, Osaka 561-0829 (JP)
(72) Inventor: HARAGUCHI Daisuke, Iwaki-shi, Fukushima 971-8101 (JP); ABE Junji, Iwaki-shi, Fukushima 971-8101 (JP); NAGAI Yuuki, Akita-shi, Akita 010-0065 (JP)
(74) Representative: Gille Hrabal Partnerschaftsgesellschaft mbB Patentanwälte
(86) International application number: PCT/JP2020/001010
(87) International publication number: WO 2020/174907

(57) **Abstract**

A tungsten recovery method including leaching tungsten while suppressing leaching of silicon by using a weak alkali compound with respect to a tungsten raw material containing silicon with tungsten oxide, separating most of the silicon as a residue during the leaching of the tungsten, and recovering a tungsten leachate having an extremely low silicon concentration.

## Description

### [Technical Field]

The present invention relates to a method for efficiently and selectively recovering tungsten from a tungsten raw material containing silicon together with tungsten.

Priority is claimed on Japanese Patent Application No. 2019-032167, filed February 25, 2019, the content of which is incorporated herein by reference.

### [Background Art]

In recent years, tungsten has been used not only as a cemented carbide tool for cutting applications, but also as an electronic material such as an electrode material and a wiring material, and as various materials such as a tungsten catalyst, and its demand is increasing year by year. On the other hand, the resources of tungsten raw materials are limited, and its stable supply is an issue. From such a background, it is required to efficiently recover and effectively use tungsten from various materials containing tungsten such as a tungsten scrap.

Some tungsten scraps contain approximately 2 to 50 wt% of silicon. In order to effectively recover tungsten from a material having a large content of silicon, it is necessary to efficiently separate silicon and selectively recover only tungsten. However, the method of the related art has problems that a process cost is high and a tungsten recovery rate is low.

The following method is known in the related art as a method for selectively recovering only tungsten from a tungsten raw material having a large amount of silicon.
(a) A tungsten recovery method including a step of bringing a mixture containing a tungsten component and a silicic acid component into contact with a hydrofluoric acid-containing liquid to elute a silicic acid component, and a step of recovering tungsten from a insoluble tungsten-containing material contained in a residue of the elution step. (Japanese Unexamined Patent Application First Publication No. 2016-89219: Patent Document 1)
(b) A method for adding an alkaline solution to a raw material containing a tungsten component and a silica component to leach the silica component (silica leaching step), oxidatively roasting a leach residue that is solid-liquid separated (oxidative roasting step), adding an alkaline solution to the roasted material to leach tungsten (W leaching step), and recovering tungsten from the solution. (Japanese Patent No. 5344154: Patent Document 2)
(c) A tungsten recovery method including a step of oxidatively roasting a raw material containing a tungsten component and a silica component, adding an alkaline solution to the roasted material to leach the tungsten compound and the silica component, adding calcium hydroxide to the leachate containing the tungsten component and the silica compound to obtain a precipitate of the silica component in the liquid, and obtaining the leachate of the tungsten component by performing the solid-liquid separation. (Japanese Patent No. 5344170: Patent Document 3)

### [Citation List]

### [Patent Documents]

### [Patent Document 1]

Japanese Unexamined Patent Application, First Publication No. 2016-89219

### [Patent Document 2]

Japanese Patent No. 5344154

### [Patent Document 3]

Japanese Patent No. 5344170

### [Summary of Invention]

### [Technical Problem]

In the method of Patent Document 1, silicon is leached by hydrofluoric acid (HF), by using the fact that tungsten carbide (WC) does not react with hydrofluoric acid. In addition, in the method of Patent Document 2, silicon is leached by NaOH by using the fact that WC does not react with NaOH. In each of these methods, silicon in the tungsten raw material is first leached to separate it from the WC-containing residue, and then the WC-containing residue is oxidatively roasted to change WC to tungsten oxide (WO₃) and alkali leached. These methods are rational as a procedure for removing silicon in the raw material in a pretreatment manner, but as a result of the entire process, two leaching steps of silicon leaching and WO₃ leaching and solid-liquid separation are repeated. For this reason, the process step becomes complicated, the processing time becomes long, the processing equipment becomes large, and the productivity tends to decrease. In addition, since wastewater containing silicon and HF or silicon and NaOH is generated in the silicon leaching step, it is necessary to take measures for wastewater treatment.

Further, in a case where a tungsten sludge or the like is used as the tungsten raw material, the tungsten sludge or the like contains oil such as cutting oil. Accordingly, it is highly viscous and has low handleability, and it is difficult to suspend it in an aqueous solution. Therefore, the leaching of silicon by suspending it in a chemical solution before removing the oil by the roasting process or the like tends to prolong the processing time. In addition, there is a problem that the equipment is easily damaged due to adhesion of oil.

In the method of Patent Document 3, the raw material containing WC and silicon is first oxidatively roasted to oxidize WC to WO₃, and then silicon is leached with tungsten by performing the leaching process by NaOH, but the process for removing silicon is performed with respect to this leachate. That is, calcium hydroxide Ca(OH)₂ is added to the leachate to precipitate CaO· SiO₂· H₂O, and silicon is removed by performing solid-liquid separation thereto.

In the method of Patent Document 3, the oil is decomposed by first oxidatively roasting the raw material. Accordingly, the above problem related to the oil is solved. However, during the precipitation process by adding Ca(OH)₂, a part of the tungsten in the leachate precipitates as calcium tungstate (CaWO₄), and the tungsten migrates into the CaO· SiO₂· H₂O precipitate. In addition, since the leachate inevitably adheres to these precipitates, a part of the tungsten contained in the leachate adheres to these precipitates, which also results in the loss of tungsten. Further, it is necessary that these precipitates are treated separately such as landfill disposal, which causes additional costs and environmental load.

### [Solution to Problem]

The tungsten recovery method according to one aspect of the present invention is a tungsten recovery method that solves the above-mentioned problems of the method in the related art, and provides a method for efficiently and selectively recovering tungsten from a tungsten raw material containing silicon together with tungsten.

One aspect of the present invention relates to the following tungsten recovery method.
[1] A tungsten recovery method comprising leaching tungsten while suppressing leaching of silicon by weak alkali leaching using a weak alkali compound with respect to a tungsten raw material containing silicon and tungsten oxide.
[2] The tungsten recovery method according to [1], in which the weak alkali compound is sodium carbonate, aqueous ammonia, or sodium phosphate.
[3] The tungsten recovery method according to [1] or [2], in which the weak alkali compound having a molar equivalent of 1.5 to 3.0 times an amount of tungsten oxide in the raw material is added to the tungsten raw material to leach tungsten.
[4] The tungsten recovery method according to any one of [1] to [3], in which the tungsten raw material is an oxidized roasted product of tungsten sludge containing tungsten carbide and silicon.
[5] The tungsten recovery method according to [4], in which the tungsten sludge is an oxidized roasted product containing 25 to 35 wt% of WO₃, 15 to 20 wt% of CoWO₄, and 25 to 50 wt% of SiO₂.

### [Advantageous Effects of Invention]

In the tungsten recovery method according to the one aspect of the present invention, the leaching of silicon is suppressed by the weak alkali leaching and the tungsten is leached. Accordingly, most of the silicon is separated as a residue during the leaching of the tungsten. Therefore, it is possible to obtain a tungsten leachate having an extremely low silicon concentration.

In addition, in the tungsten recovery method according to the one aspect of the present invention, in a case where the leaching of silicon and the solid-liquid separation, and the leaching of tungsten and the solid-liquid separation are performed, it is not necessary to perform the complicated process step described above, and the process step is simplified. Accordingly, the processing time can be shortened, the processing equipment can be simplified, and the productivity can be increased. In addition, since the number of times of solid-liquid separations is small, it is possible to suppress tungsten from migrating to a residue and lost due to coprecipitation, adsorption, adhesion, and the like of tungsten.

In the tungsten recovery method according to the one aspect of the present invention, a chemical agent such as hydrogen fluoride is not used, and accordingly, it is possible to reduce the cost of the chemical cost and stably perform the process operation. In addition, in the tungsten recovery method according to the one aspect of the present invention, a chemical agent of a calcium compound as in the method of the related art is not used. Accordingly, no extra precipitation occurs, and it is possible to save time and effort in wastewater treatment and sludge disposal and reduce the process cost and environmental load.

### [Brief Description of Drawings]

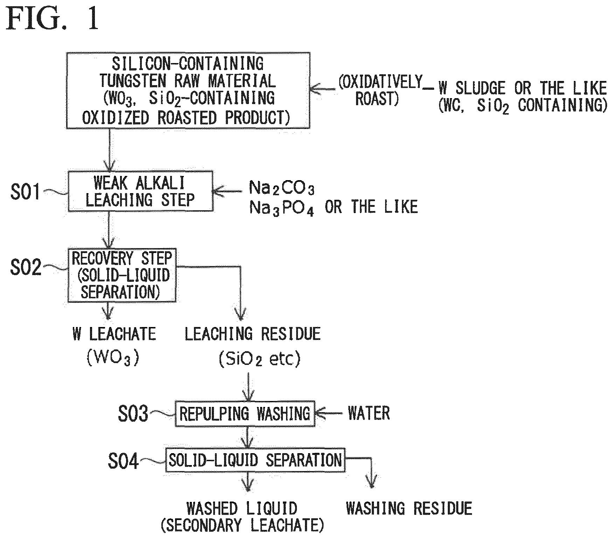

Fig. 1 is a process step diagram representing an example of a recovery method according to an embodiment of the present invention.

### [Description of Embodiments]

Next, an embodiment of the present invention will be described with reference to the drawing.

Fig. 1 is a process step diagram representing an example of a recovery method according to a first embodiment of the present invention.

### <Silicon-containing tungsten raw material>

The tungsten recovery method according to the present embodiment is a method for selectively leaching and recovering tungsten from a tungsten raw material containing silicon together with tungsten oxide. As the tungsten raw material, an oxidized roasted product such as tungsten sludge containing tungsten carbide (WC) and silicon can be used. Examples of tungsten sludge containing WC and silicon include recovery sludge of cutting waste slurry discharged from a step of using a cemented carbide tool. In addition to tungsten carbide (WC) and cobalt (Co) derived from the cemented carbide tool component, diatomaceous earth (SiO₂) which is used as a filtration aid during the solid-liquid separation and recovery, is mixed in the recovery sludge of the cutting waste.

In general, in a case where WC or Co contained in the recovery sludge is oxidatively roasted, the reaction occurs as the following formulae [1] and [2], and a roasted material containing approximately 25 to 35 wt% of WO₃, 15 to 20 wt% of CoWO₄, and 25 to 50 wt% of SiO₂ is obtained.

WC + 5/2O₂ → WO₃ + CO₂ ... [1]

WC + Co + 3O₂ → CoWO₄ + CO₂ ... [2]

### <Weak alkali leaching step S01>

In the tungsten recovery method according to the present embodiment, a weak alkali compound is used as a leaching agent. As the weak alkali compound, sodium carbonate, aqueous ammonia, sodium phosphate, or the like can be used. By using sodium carbonate, sodium phosphate, or the like, tungsten oxide (WO₃) reacts as the following formula [3] to produce and leach sodium tungstate (Na₂WO₄). On the other hand, since silicon is difficult to be leached by a weak alkali compound, tungsten can be selectively leached.

WO₃ (s) + Na₂CO₃ (aq) + H₂O → Na₂WO₄ (aq) + H₂CO₃ (aq) ... [3]

The amount of the weak alkali compound used is preferably 1.5 to 3.0 times the molar equivalent, and more preferably 2.0 to 2.5 times the molar equivalent with respect to the amount of tungsten oxide in the raw material. In a case where the amount thereof used is 3.5 times the molar equivalent or more than the amount of WO₃, the leached amount of silicon increases. Accordingly, in order to suppress the leaching of silicon, the amount of the weak alkali compound used is preferably in the range described above (1.5 times to 3.0 times molar equivalent).

Water may be added to the tungsten raw material described above (oxidized roasted product of tungsten sludge or the like) to form slurry, and a weak alkali compound such as sodium carbonate may be added to the slurry for leaching. A solid content concentration of the slurry is preferably in a range of 10 to 600 g/L, and more preferably in a range of 300 to 350 g/L. In a case where the slurry concentration is lower than the range described above, the economic efficiency such as chemical cost and treatment amount is reduced, and in a case where the slurry concentration is higher than the range described above, the leaching time becomes long.

A leaching temperature is preferably 100°C or higher and more preferably 150°C to 200°C. A leaching time may be approximately 2.5 hours to 3.5 hours.

In a leaching step S01, for example, by using 1.5 to 3.0 times the molar equivalent of sodium carbonate with respect to the amount of tungsten oxide in the raw material, leaching of tungsten can be promoted while suppressing leaching of silicon. It is possible to obtain a leachate in which a WO₃ leaching rate is 90% or more and a ratio of a Si concentration of the leachate to a WO₃ concentration (Si [g/L]/WO₃ [g/L]) is suppressed to less than 0.004.

Generally, in a case where the Si [g/L]/WO₃ [g/L] concentration ratio in the liquid is less than 0.005, the Si concentration is sufficiently low. Accordingly, it is possible to prevent reprecipitation of Si in the leachate. In the recovery method of the present invention, the Si [g/L]/WO₃ [g/L] concentration ratio of the leachate can be suppressed to less than 0.004. Accordingly, Si reprecipitation does not occur.

In a case where the alkali leaching with NaOH is performed, as shown in the following formulae [4] and [5], a large amount of silicon is leached together with tungsten oxide (WO₃). Accordingly, tungsten cannot be selectively leached.

WO₃ (s) + 2NaOH (aq) → Na₂WO₄ (aq) + H₂O ... [4]

SiO₂ (s) + 2NaOH (aq) → Na₂SiO₃ (aq) + H₂O ... [5]

<Recovery step S02>

In a recovery step S02, a leachate and a leaching residue are separated into solid and liquid and recovered. Since this leachate contains almost no silicon, tungsten can be efficiently recovered. Meanwhile, water is added to the recovered leaching residue to perform repulping washing (S03) to wash out the leachate adhering to the residue. This is solid-liquid separated (S04) to recover the washed liquid (secondary leachate), and tungsten (Na₂WO₄) contained in the washed liquid (secondary leachate) can be recovered. The repulping washing (S03) of the leaching residue may be performed as necessary.

In the tungsten recovery method according to the present embodiment, the leaching of silicon is suppressed by the weak alkali leaching and the tungsten is leached. Accordingly, most of the silicon is separated as a residue during the leaching of the tungsten. Therefore, it is possible to obtain a tungsten leachate having an extremely low silicon concentration.

In addition, in the tungsten recovery method according to the present embodiment, in a case where the leaching of silicon and the solid-liquid separation, and the leaching of tungsten and the solid-liquid separation are performed, it is not necessary to perform the complicated process step described above, and the process step is simplified. Accordingly, the processing time can be shortened, the processing equipment can be simplified, and the productivity can be increased. In addition, since the number of times of solid-liquid separations is small, it is possible to suppress tungsten from migrating to a residue and lost due to coprecipitation, adsorption, adhesion, and the like of tungsten.

In the tungsten recovery method according to the present embodiment, a chemical agent such as hydrogen fluoride is not used, and accordingly, it is possible to reduce the cost of the chemical cost and stably perform the process operation. In addition, in the tungsten recovery method according to the present embodiment, a chemical agent of a calcium compound as in the method of the related art is not used. Accordingly, no extra precipitation occurs, and it is possible to save time and effort in wastewater treatment and sludge disposal and reduce the process cost and environmental load.

### [Examples]

Hereinafter, examples of the recovery method according to the present invention will be shown together with comparative examples.

The WO₃ concentration in the tungsten raw material and the leaching residue was measured according to a measurement method specified in the standard (JIS M 8128 method for quantifying tungsten in ore). In addition, the Si concentration was measured by fluorescence X-ray analysis. The WO₃ concentration and Si concentration in the leachate were measured by ICP-AES analysis.

As the silicon-containing tungsten raw material, an oxidized roasted product containing the WO₃ concentration of 59.6 wt% and the Si concentration of 14.7 wt% was used.

The WO₃ leaching rate was calculated by an equation of WO₃ leaching rate [%] = WO₃ [g] in the leachate/(WO₃ [g] in the leachate + WO₃ [g] in the leaching residue).

The Si/WO₃ concentration ratio of the leachate was defined as the Si [g/L]/WO₃ [g/L] ratio.

### [Example 1]

150 g of a silicon-containing tungsten raw material (the oxidized roasted product described above) was put in an autoclave container, and 500 mL of water was added to have the slurry concentration to 300 g/L. 81.7 g of sodium carbonate ([Na₂CO₃]/[WO₃] molar ratio = 2.0 times equivalent) was added thereto, heated to 200°C, and held for 1 hour to leach WO₃.

A volume of the leachate after leaching was 540 mL, and in the composition, the WO₃ concentration was 157.2 g/L, the Si concentration was 0.21 g/L, the Si/WO₃ concentration ratio was 0.0013, and the Si concentration was sufficiently lower than 0.004 which is the target Si/WO₃ concentration ratio. The dry leaching residue was 68.0 g, and the WO₃ concentration in the leaching residue was 6.4 wt%. From this result, the WO₃ leaching rate was 95.1 %, and a high leaching rate was obtained.

### [Example 2]

The amount of sodium carbonate added was 102.2 g ([Na₂CO₃]/[WO_{3]} molar ratio = 2.5 times equivalent), and leaching was performed in the same manner as in Example 1 under other conditions. As a result, a volume of the leachate after leaching was 550 mL, and in the composition, the WO₃ concentration was 157.5 g/L, the Si concentration was 0.22 g/L, the Si/WO₃ concentration ratio was 0.0014, and the Si concentration was sufficiently lower than 0.004 which is the target Si/WO₃ concentration ratio. The dry leaching residue was 66.5 g, and the WO₃ concentration in the leaching residue was 3.9 wt%. From this result, the WO₃ leaching rate was 97.1%, and a high leaching rate was obtained.

### [Example 3]

The amount of sodium carbonate added was 122.6 g ([Na₂CO₃]/[WO_{3]} molar ratio = 3.0 times equivalent), and leaching was performed in the same manner as in Example 1 under other conditions. As a result, a volume of the leachate after leaching was 560 mL, and in the composition, the WO₃ concentration was 156.9 g/L, the Si concentration was 0.23 g/L, the Si/WO₃ concentration ratio was 0.0015, and the Si concentration was sufficiently lower than 0.004 which is the target Si/WO₃ concentration ratio. The dry leaching residue was 64.1 g, and the WO₃ concentration in the leaching residue was 2.1 wt%. From this result, the WO₃ leaching rate was 98.5%, and a high leaching rate was obtained.

### [Example 4]

The amount of sodium carbonate added was 57.2 g ([Na₂CO₃]/[WO_{3]} molar ratio = 1.4 times equivalent), and leaching was performed in the same manner as in Example 1 under other conditions. As a result, a volume of the leachate after leaching was 530 mL, and in the composition, the WO₃ concentration was 140.7 g/L, the Si concentration was 0.16 g/L, the Si/WO₃ concentration ratio was 0.0012, and the Si concentration was sufficiently lower than 0.004 which is the target Si/WO₃ concentration ratio. However, the dry leaching residue was 71.2 g, and the WO₃ concentration in the leaching residue was 21.1 wt%. From this result, it was confirmed that, the WO₃ leaching rate was 83.2%, and in order to increase the WO₃ leaching rate to 95% or more, the [Na₂CO₃]/[WO₃] molar ratio is preferably 1.5 times equivalent or more.

### [Example 5]

By using sodium phosphate instead of sodium carbonate, the amount thereof added was set to 158.0 g ([Na₂CO₃]/[WO₃] molar ratio = 2.5 times equivalent), and leaching was performed in the same manner as in Example 1 under other conditions. As a result, a volume of the leachate after leaching was 580 mL, and in the composition, the WO₃ concentration was 149.6 g/L, the Si concentration was 0.20 g/L, the Si/WO₃ concentration ratio was 0.0013, and the Si concentration was sufficiently lower than 0.004 which is the target Si/WO₃ concentration ratio. The dry leaching residue was 66.9 g, and the WO₃ concentration in the leaching residue was 4.1 wt%. From this result, the WO₃ leaching rate was 96.9%, and a high leaching rate was obtained.

### [Comparative Example 1]

By using sodium hydroxide instead of sodium carbonate, the amount thereof added was set to 61.7 g ([Na₂CO₃]/[WO_{3]} molar ratio = 4.0 times equivalent), and leaching was performed in the same manner as in Example 1 under other conditions. As a result, a volume of the leachate after leaching was 530 mL, and in the composition, the WO₃ concentration was 165.2 g/L, the dry leaching residue was 68.6 g, and the WO₃ concentration in the leaching residue was 2.5 wt%. From this result, the WO₃ leaching rate was 98.1%. However, the Si concentration of the leachate was 42.9 g/L, and a large amount of silicon was leached. As a result, the Si/WO₃ concentration ratio was as high as 0.26, which was not suitable to suppress silicon leaching and selectively leaching tungsten.

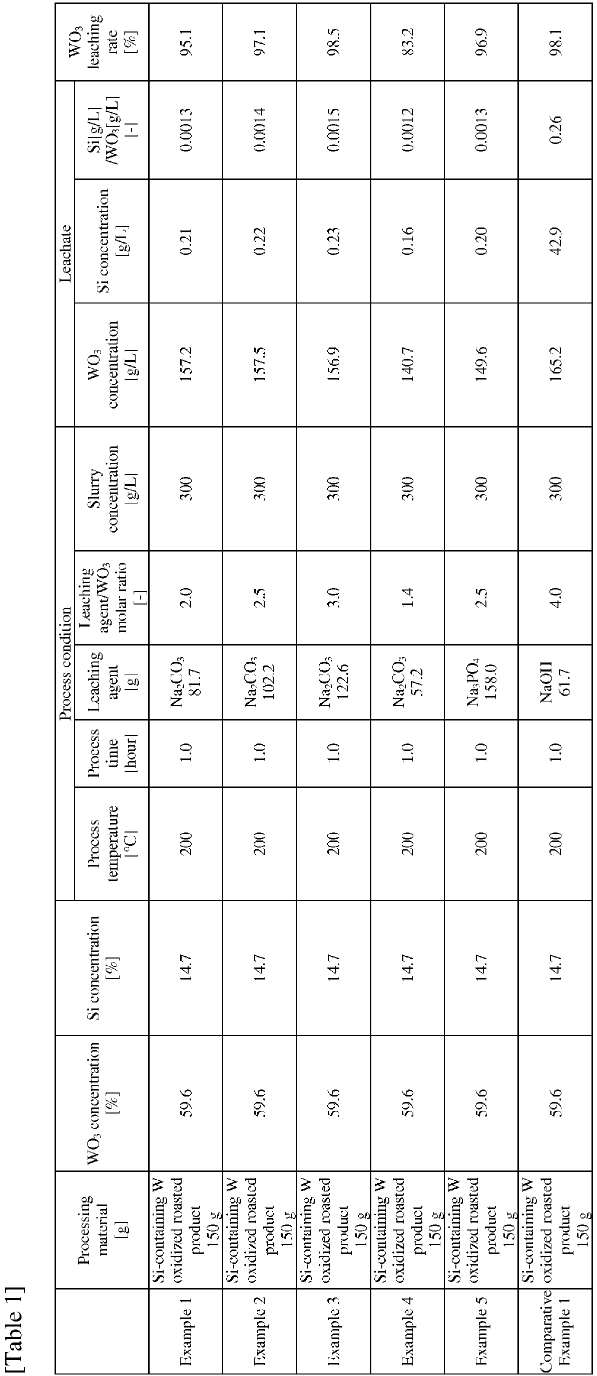

### [Industrial Applicability]

The present invention provides the method for efficiently and selectively recovering tungsten from a tungsten raw material containing silicon together with tungsten.

## Claims

1. A tungsten recovery method comprising leaching tungsten while suppressing leaching of silicon by weak alkali leaching using a weak alkali compound with respect to a tungsten raw material containing silicon and tungsten oxide.

2. The tungsten recovery method according to Claim 1,
wherein the weak alkali compound is sodium carbonate, aqueous ammonia, or sodium phosphate.

3. The tungsten recovery method according to Claim 1 or 2,
wherein the weak alkali compound having a molar equivalent of 1.5 to 3.0 times an amount of tungsten oxide in the raw material is added to the tungsten raw material to leach tungsten.

4. The tungsten recovery method according to any one of Claims 1 to 3,
wherein the tungsten raw material is an oxidized roasted product of tungsten sludge containing tungsten carbide and silicon.

5. The tungsten recovery method according to Claim 4,
wherein the tungsten sludge is an oxidized roasted product containing 25 to 35 wt% of WO₃, 15 to 20 wt% of COWO₄, and 25 to 50 wt% of SiO₂.
